# EUROPÄISCHE PATENTSCHRIFT

(11) **EP 0 860 350 B1**
(45) Veröffentlichungstag und Bekanntmachung des Hinweises auf die Patenterteilung: **13.08.2003**
(21) Anmeldenummer: 98103069.5
(22) Anmeldetag: 21.02.1998
(51) Int. Cl.: B62D 53/02, B62D 55/04, B62D 55/065, B62D 49/06

(54) **Landwirtschaftliche Arbeitsmaschine**
Agricultural machine
Machine agricole

(30) Priorität: 21.02.1997 DE 19706956; 18.07.1997 DE 19730825
(43) Veröffentlichungstag der Anmeldung: 26.08.1998
(73) Patentinhaber: Horsch Maschinen GmbH, 92421 Schwandorf (DE)
(72) Erfinder: Horsch, Michael, 92421 Schwandorf (DE)
(74) Vertreter: Wasmeier, Alfons, Dipl.-Ing.

(56) Entgegenhaltungen:
- EP-A- 0 066 677
- DE-C- 969 859
- DE-U- 9 402 066
- FR-A- 2 434 075
- GB-A- 2 105 272
- US-A- 1 785 124
- US-A- 3 447 619
- US-A- 4 157 125
- US-A- 5 113 958
- US-A- 5 318 141
- US-A- 5 373 909

## Beschreibung

Die Erfindung betrifft eine landwirtschaftliche Arbeitsmaschine nach dem Oberbegriff des Anspruches 1.

Es sind landwirtschaftliche Schlepper bekannt (DE-OS 27 45 170), bei denen die Hinterräder als Kettenräder mit Raupenketten ausgebildet sind, die Fahrerkabine etwa über den Raupenketten angeordnet ist, die Vorderräder herkömmliche Reifenräder mit kleinerem Spurabstand als die hinteren Kettenräder sind, hinter den Kettenrädern, zwischen den Kettenrädern und den Vorderrädern, und vor den Vorderrädern Vorrichtungen zur Auf-nahme von Bearbeitungswerkzeugen vorgesehen sind und der Antriebsmotor zwischen Vorder- und Hinterrädern angeordnet ist.

Desweiteren sind lastwagenartige Transportfahrzeug bekannt (DE-OS 195 06 575), deren Hinterräderanordnungen aus Raupenkettenantrieben bestehen, über denen die Fahrzeug-ladefläche sitzt, und über deren Vorderradachse das Fahrerhaus angeordnet ist.

Bei derartigen Fahrzeugen ist im hinteren Bereich ein zentrales Hinterrad angebracht. Für die Fahrt auf öffentlichen Straßen wird das Fahrzeug von den Raupen abgehoben und als reines Radfahrzeug betrieben.

Die OS 43 35 657 betrifft ein Gleiskettenlaufwerk mit einem Gummilaufband für landwirtschaftliche Erntemaschinen. Hierbei sind sämtliche Räder durch ein Gleiskettenlaufwerk ersetzt. Dies ergibt eine landwirtschaftliche Maschine, die zwar für den Einsatz als Erntemaschine, insbesondere als Mähdrescher, geeignet ist, nicht aber für eine Arbeitsmaschine, die als Schlepperfahrzeug wendig und gut lenkbar sein muß.

Aufgabe der Erfindung ist es, eine landwirtschaftliche Arbeitsmaschine, vorzugsweise eine selbstfahrende Maschine mit möglichst geringen Bodendruck bei maximaler Nutzlastauf-nahme, extrem geringem Schwerpunkt der aufzunehmenden Last, guter Lenk- und Steuerbarkeit, sowie hoher Zugkraftübertragung zu schaffen.

Gemäß der Erfindung wird dies mit einer Maschine mit den Merkmalen des Kennzeichens des Anspruches 1 erreicht.

Eine derartige erfindungsgemäße selbstfahrende Arbeitsmaschine zeichnet sich dadurch aus, daß der hintere Teil der Arbeitsmaschine mit einem Laufwerk, insbes. Gummibandlaufwerk versehen ist, das eine sehr tiefe und sehr lange Ladefläche sowie einen geringen Bodendruck ergibt, während der vordere Teil wahlweise mit einem in der Mittenlängsachse der Arbeitsmaschine angeordneten Einzelrad, das mit einem Reifen bestückt ist, und zwischen den Spuren der Laufwerkbänder läuft, ausgerüstet ist, also einer Kombination aus Rad und Laufbändern. Damit ergibt sich eine gute Lenkbarkeit der Arbeitsmaschine, andererseits eine hohe Belastbarkeit des hinteren Maschinenteils über dem Bandlaufwerk. Das Vorderrad ist vorzugswise mit Breitreifen bestückt, und ist über eine Schwinge am Rahmen gelagert Die Fahrerkabine ist vor dem Laufwerk angeordnet, so daß die gesamte Fläche des Laufwerkes für die Aufnahme von Nutzlast zur Verfügung steht, wobei die Nutzlast beispielsweise ein Vorratstank, ein Säkasten, ein Düngerbehälter oder dergleichen ist, der aufgrund der geringen Höhe des Laufwerkes einen besonders niedrigen Schwerpunkt hat, und damit für großvolumige Aufbauten besonders geeignet ist.

Die FR-PS-24 34 075, die als nächster stand der Technit angesehen wird, betrifft ein lastwagenartiges, vierrädriges Fahrzeug, dessen Hinterräder als Kettenlaufwerk ausgebildet sind. Bei einem derartigen Fahrzeug ist das Fahrerhaus etwa über der Vorderachse und der Motor etwa vor der Vorderachse angeordnet, die Bandlaufwerke sind relativ kurz ausgebildet, und aufgrund der relativ kleinen Auflagefläche und des dadurch bei Aufnahme großer Lasten auftretenden hohen Bodendruckes nicht für das Aufsetzen schwerer Lasten ausgelegt.

Aus der US-A-5373909 ist ein Bandlaufwerk mit Pendelachse für landwirtschaftliche Fahrzeuge, wie z. B. Mähdrescher, bekannt, das im Bereich der vorderen wie auch der hinteren Achse Laufbänder aufweist und nicht für den Transport schwerer Lasten ausgelegt ist. Die Länge der tragenden Laufwerkbänder ist hierbei nicht größer als die Breite des Laufwerkes, sondern eher kleiner, da es auf die Fläche der Laufwerkbänder ankommt, die aufgrund des Bodenkontaktes den Bodendruck bestimmt.

Die DE-C-969589 betrifft eine Gattung von Fahrzeugen, die von Räderbetrieb auf Gleiskettenbetrieb und umgekehrt umstellbar sind, wobei das Fahrzeug ein Lastkraftwagen oder ein landwirtschaftlicher Schlepper sein kann. Da das Antriebsrad gegenüber den Laufrädern und den Leiträdern erheblich höher gelagert ist, wird hierbei eine niedrige Ladefläche nicht erreicht, was bei dieser Art von Fahrzeugen offensichtlich keine Rolle spielt, da die Breite der Last kleiner sein soll als der Innenabstand der Gleiskette.

Der Rahmen der Arbeitsmaschine ist wahlweise ein durchgehender Rahmen, der sich von dem Vorderrad über die gesamte Arbeitsmaschine nach hinten erstreckt, oder aber ein zweiteiliger Rahmen, dessen einer Teil der Laufwerkrahmen ist, und dessen anderer Teil den vorderen Abschnitt, nämlich das Vorderrad, die Kabine und dergleichen aufnimmt. Im letzteren Fall sind beide Rahmenabschnitte durch ein Gelenk miteinander gekoppelt.

Die Fahrerkabine ist am vorderen Rahmenteil aufgesetzt, wobei der Motor und das Getriebe entweder unmittelbar unterhalb der Fahrerkabine oder aber vor den Vorderreifen angeordnet sind, um eine optimale Gewichtsverteilung zu erzielen. Am vorderen Rahmenteil können Aufnahmevorrichtungen für Frontwerkzeuge, Hubvorrichtungen oder dergleichen angeordnet sein, während am Ende des hinteren Abschnittes ein Zapfwellenantrieb, ein Zugpendel und/oder Dreipunktgestänge sowie entsprechende Anhängevorrichtungen vorgesehen sein können.

Der Antriebsmotor für das Laufwerk ist vorzugsweise ein hydrostatischer Antrieb, der über einen Hydromotor angetrieben wird. Alternativ ist der Antrieb hydrostatisch und das Rad und/oder das Bandlaufwerk werden elektronisch gesteuert. Das Laufwerk, ein Gummibandlaufwerk, wird beidseitig an den vorderen und hinteren Umlenkrollen angetrieben und weist eine Pendelachse auf. Die Gummibänder können auch durch Gliederketten ersetzt sein. Dadurch, daß das Laufwerk an beiden Umlenkroltlen angetrieben wird, werden geringere Spannkräfte bei höherem Reibwert möglich als dies beim Antrieb nur einer Umlenkrolle erreichbar wäre.

Nachstehend wird die Erfindung in Verbindung mit der Zeichnung anhand eines Ausfüh-rungsbeispiels erläutert. Es zeigt:
- Fig. 1: eine schematische Seitenansicht einer Arbeitsmaschine nach einer ersten Ausführungsform der Erfindung;
- Fig. 2: eine Aufsicht auf die Darstellung nach Figur 1;
- Fig. 3: eine Ausführungsform der Arbeitsmaschine nach der Erfindung in seitlicher Ansicht für eine Einsatzmöglichkeit;
- Fig. 4: eine Rückansicht der Darstellung nach Figur 3;
- Fig. 5: eine andere Einsatzmöglichkeit der Arbeitsmaschine nach der Erfindung in seitlicher Ansicht;
- Fig.6: die Anordnung nach Figur 5 in einer Ansicht von hinten;

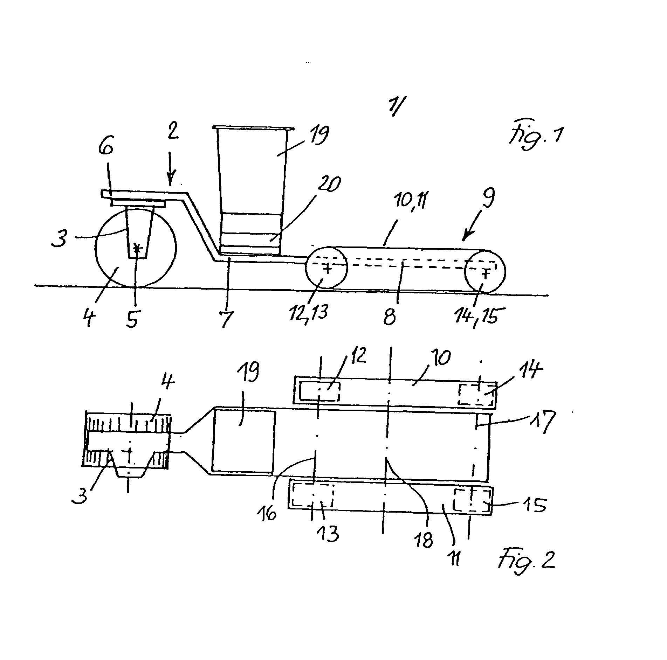

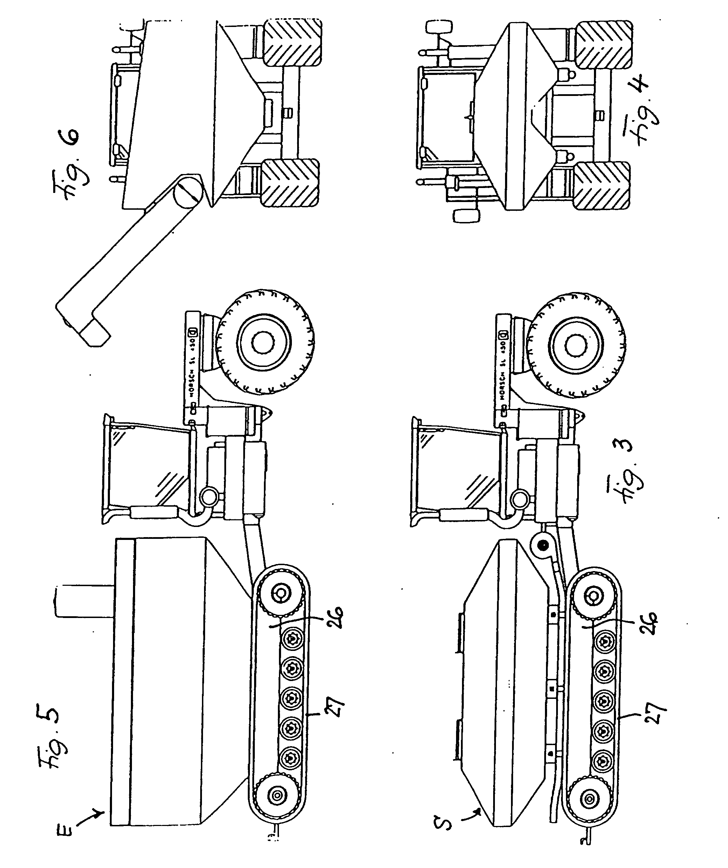

In der schematischen Darstellung nach den Figuren 1 und 2 besteht die Arbeitsmaschine 1 aus einem Rahmenteil 2, an dem eine Schwinge 3 befestigt ist, in der ein Vorderrad 4 in einem Achsstummel 5 gelagert ist. Mit 6 ist der vordere Rahmenabschnitt, mit 7 der mitt-lere Rahmenabschnitt und mit 8 der hintere Rahmenabschnitt bezeichnet. Während der Vorderabschnitt mit einem Einzelrad 4 mit Gummireifen bestückt ist, ist der hintere Ab-schnitt der Arbeitsmaschine 1 ein Laufwerk 9 mit Gummilaufbändern 10 und 11, die über Umlenkrollen 12, 13, 14, 15 laufen, die auf einer vorderen Achse 16 und einer hinteren Achse 17 angeordnet sind. Mit 18 ist eine quer zur Maschinenlängsachse dargestellte Querachse 18, die eine Pendelachse ist, um die das Laufwerk pendein kann, bezeichnet. Der Durchmesser der Umlenkrollen 12 - 15 und damit die Höhe des Laufwerkes 9 ist im Vergleich zum Durchmesser des Vorderrades 4 klein, beispielsweise 50%. Der mittlere Rahmenabschnitt 7 nimmt eine Fahrerkabine 19 und den unterhalb des Bodens der Fahrerkabine angeordneten Motor 20 auf. Die Schwinge 3 ist mit dem vorderen Rahmen-abschnitt beispielsweise über einen Drehkranz gelagert.

Die Darstellung nach den Figuren 3, 4 und 5, 6 zeigt zwei Ausführungsformen von Einsatzmöglichkeiten für Aufbauten, die von dem hinteren Rahmenabschnitt 26 und dem Laufwerk 27 aufgenommen werden In Figur 3, 4 ist dies ein Saatgut- oder Düngemitteltank S, im Falle der Figuren 5 und 6 ein Erntegutcontainer E, z.B. für Getreide, Mais oder dergleichen.

## Patentansprüche

1. Selbstfahrende landwirtschaftliche Arbeitsmaschine mit einer Ladefläche über der Hinterachsanordnung (16, 17), einer Fahrerkabine (19) zwischen Vorderachs- und Hinterachsanordnung (5; 16,17), einem Motor (20) im vorderen Fahrzeugbereich und einem der Vorderachsanordnung zugeordneten Vorderrahmen (6) sowie der Hinterachsanordnung zugeordnetem Hinterrahmen (8), wobei die Hinterachsanordnung (16, 17) ein Bandlaufwerk (9), vorzugsweise ein Gummibandlaufwerk, aufweist, die Vorderachsanordnung (5) mit Einzelreifen (4) bestückt ist, der Rahmen (8) des Bandlaufwerkes (9) für Nutzaufbauten der Maschine verfügbar ist, und die Fahrerkabine (19) zwischen Vorderachse (5) und vorderer Begrenzung der Hinterachsanordnung (9) angeordnet ist, **dadurch gekennzeichnet, daß**
a) die Vorderachsanordnung (5) aus einem Einzel-Vorderrad (4) besteht, dessen Spur in Längsrichtung der Arbeitsmaschine mittig zwischen den Laufbändern (10, 11) der Hinterachsanordnung (9) verläuft, und das Vorderrad (4) in einer Schwinge (3) des Maschinenrahmens (2, 6) drehbar gelagert ist;
b) das Bandlaufwerk (9) über Umlenkrollen (12, 13, 14, 15) laufende Gummilaufbänder (10, 11), die auf einer vorderen Achse (16) und einer hinteren Achse (17) laufen, sowie über eine quer zur Maschinenlängsachse angeordnete Querachse (18) aufweist, die als Pendelachse ausgebildet ist, und um die das Bandlaufwerk (9) pendelnd ausgebildet ist;
c) die Länge des Bandlaufwerkes (9) und der tragenden Laufwerkbänder (10, 11) größer als die Breite des Laufwerkes (9) ist, sowie der Rahmen des Bandlaufwerkes in voller Länge und Breite für Nutzanfbauten der Maschine verfügbar ist, und
d) zur Erzielung einer möglichst niedrig gelegenen Ladefläche und eines flachen Bandvorlaufes der Durchmesser der Umlenkrollen des Bandlaufwerkes klein im Vergleich zum Durchmesser des Vorderrades (4) und zum Abstand zwischen vorderen und hinteren Umlenkrollen (12 - 15) ausgelegt ist.

2. Arbeitsmaschine nach Anspruch 1, **dadurch gekennzeichnet, daß** der Motor (20) unterhalb des Kabinenbodens angeordnet ist.

3. Arbeitsmaschine nach Anspruch 1, **dadurch gekennzeichnet, daß** das Vorderrad (4) mit Breitreifen bestückt ist, dessen Fahrspur in Fahrtrichtung mittig zwischen den beiden Bandlaufwerken verläuft, derart, daß die Fahrspuren der Bänder und des Reifens im wesentlichen eine Gesamtspur über die vollen Maschinenbreite abdecken.

4. Arbeitsmaschine nach einem der Ansprüche 1 - 3, **dadurch gekennzeichnet, daß** der Antrieb für die Vorderachs- und die Hinterachsanordnung ein hydrostatischer Antrieb ist, und daß Rad und Bandlaufwerk unabhängig voneinander elektronisch gesteuert werden.

5. Arbeitsmaschine nach einem der Ansprüche 1- 4, **dadurch gekennzeichnet, daß** die Hinterachsanordnung einen Behälter, Tank oder dergleichen für Dünger, Chemikalien, Wasser, oder dergleichen aufnimmt, und daß Schnellwechselvorrichtungen für den Austausch der Aufbauten vorgesehen sind.

## Claims

1. Automotive agricultural machine with a loading surface above the rear axle assembly (16, 17), a driver's cab (19) between the front and rear axle assemblies (5; 16, 17), an engine (20) in the front vehicle area and a front frame (6) associated with the front axle assembly and a rear frame (8) associated with the rear axle assembly (16, 17) which has a belt running gear (9), preferably a rubber belt running gear, the front axle assembly (5) is equipped with single tyres (4), the frame (8) of the belt running gear (9) is available for useful structures of the machine and the driver's cab (19) is located between the front axle (5) and the front bounding of the rear axle assembly (9), **characterized in that**
a) the front axle assembly (5) comprises a single front wheel (4), whose track passes centrally between the moving belts (10, 11) of the rear axle assembly (9) in the longitudinal direction of the machine and the front wheel (4) is mounted in rotary manner in a rocker arm (3) of the machine frame (2, 6);
b) the belt running gear (9) has moving rubber belts (10, 11) running over guide pulleys (12, 13, 14, 15) and which run on a front axle (16) and a rear axle (17), as well as a transverse axle (18), constructed as a pendulum axle, and about which the belt running gear (9) is constructed in pendulum manner;
c) the length of the belt running gear (9) and the supporting running gear belts (10, 11) exceeds the width of the running gear (9) and the full length and width of the belt running gear frame is available for useful structures of the machine; and
d) to obtain a maximum low-lying loading surface and a flat belt advance the diameter of the belt running gear guide pulleys is small compared with the diameter of the front wheel (4) and is spaced between the front and rear guide pulleys (12-15).

2. Machine according to claim 1, **characterized in that** the engine (20) is located below the cab floor.

3. Machine according to claim 1, **characterized in that** the front wheel (4) is equipped with wide tyres, whose track in the travel direction is positioned centrally between the two belt running gears in such a way that the tracks of the belts and the tyre essentially cover an overall track over the full machine width.

4. Machine according to one of the claims 1 to 3, **characterized in that** the drive for the front and rear axle assemblies is a hydrostatic drive and the wheel and the belt running gear are electronically controlled independently of one another.

5. Machine according to one of the claims 1 to 4, **characterized in that** the rear axle assembly receives a container, tank, etc. for fertilizer, chemicals, water, etc. and that there are quick-change mechanisms for changing the structures.

## Revendications

1. Machine de travail agricole autotractée avec une surface de chargement au-dessus de la structure d'essieu arrière (16,17), une cabine de pilotage (19) située entre la structure d'essieu avant et la structure d'essieu arrière (5 ; 16, 17), un moteur situé dans la zone avant du véhicule, un cadre avant (6) raccordé à la structure d'essieu avant et un cadre arrière (8) raccordé à la structure d'essieu arrière, la structure d'essieu arrière (16, 17) présentant un dérouleur de bande (9), de préférence en caoutchouc, la structure d'essieu avant (5) étant équipée de pneus individuels (4), le cadre (8) du dérouleur de bande (9) étant disponible pour des montages utiles de la machine et la cabine de pilotage (19) ayant été disposée entre l'essieu avant (5) et la délimitation antérieure de la structure d'essieu arrière (9), et **caractérisée en ce que**
a) la structure d'essieu avant (5) est constituée d'une roue avant individuelle (4) dont la trace s'étend dans la direction longitudinale de la machine de travail, de manière centrée entre les tapis roulants (10,11) de la structure d'essieu arrière (9) et la roue avant (4) a été fixée de manière à pouvoir tourner dans une bielle oscillante (3) du cadre de la machine (2,6) ;
b) le dérouleur de bande (9) présente des tapis roulants en caoutchouc (10,11) progressant via des rouleaux de renvoi (12,13,14,15), sur un essieu avant (16) et un essieu arrière (17), et via un essieu transversal (18) disposé transversalement par rapport à l'essieu longitudinal de la machine, conçu sous la forme d'un essieu oscillant et autour duquel le dérouleur de bande (9) a été conçu de façon oscillante ;
c) la longueur du dérouleur de bande (9) et des bandes de roulement (10, 11) qui le supportent dépasse la largeur du dérouleur de bande (9) et le cadre du dérouleur de bande est disponible dans toute sa longueur et toute sa largeur pour des montages utiles de la machine ;
d) le diamètre des rouleaux de renvoi du dérouleur de bande est réduit par rapport au diamètre de l'essieu avant (4) et par rapport à la distance entre les rouleaux de renvoi (12-15) antérieurs et postérieurs, afin d'obtenir une surface de chargement aussi basse que possible et une avance de bande plate.

2. Machine de travail selon la revendication 1, **caractérisée en ce que** le moteur (20) a été disposé sous le plancher de la cabine.

3. Machine de travail selon la revendication 1, **caractérisée en ce que** la roue avant (4) est équipée de pneus larges dont la trace s'étend dans la direction de roulage, de façon centrée entre les deux dérouleurs de bande, et de telle sorte que les traces de roulage des bandes et du pneu couvrent essentiellement une trace totale sur toute la largeur de la machine.

4. Machine de travail selon une des revendications 1 à 3, **caractérisée en ce que** l'entraînement pour la structure d'essieu avant et la structure d'essieu arrière est un entraînement hydrostatique et **en ce que** la roue et le dérouleur de bande sont guidés de façon électronique, indépendamment l'un de l'autre.

5. Machine de travail selon une des revendications 1 à 4, **caractérisée en ce que** la structure d'essieu arrière reçoit un récipient, un réservoir ou apparenté pour l'engrais, les produits chimiques, l'eau ou des produits similaires, et **en ce que** des dispositifs de changement rapide ont été prévu pour changer les montages.
